Europäisches Patentamt

European Patent Office

Office européen des brevets

(11) Publication number: **0 207 153**
**B1**

# EUROPEAN PATENT SPECIFICATION

(45) Date of publication of patent specification: **23.05.90**

(21) Application number: **86900698.1**

(22) Date of filing: **20.12.85**

(86) International application number:
**PCT/US85/02560**

(87) International publication number:
**WO 86/03916 03.07.86 Gazette 86/14**

(51) Int. Cl.⁵: **H 04 N 3/09, G 02 B 26/10**

(54) **MULTIPLE FIELD OF VIEW SENSOR.**

(30) Priority: **26.12.84 US 686357**

(43) Date of publication of application:
**07.01.87 Bulletin 87/02**

(45) Publication of the grant of the patent:
**23.05.90 Bulletin 90/21**

(84) Designated Contracting States:
**AT BE CH DE FR GB IT LI LU NL SE**

(56) References cited:
**WO-A-84/03777**
**DE-A-1 522 286**
**GB-A-2 106 267**
**US-A-3 804 976**

(73) Proprietor: **Hughes Aircraft Company**
**7200 Hughes Terrace P.O.Box 45066**
**Los Angeles California 90045-0066 (US)**

(72) Inventor: **PINES, Michael, Y.**
**11433 Chenault Street**
**Los Angeles, CA 90049 (US)**
Inventor: **DEMAS, Themi, H.**
**8016 Cowan Avenue**
**Los Angeles, CA 90045 (US)**
Inventor: **SCHAEFER, Robert, D.**
**17931 Bluegate Lane**
**Huntington Beach, CA 92647 (US)**

(74) Representative: **Kuhnen, Wacker & Partner**
**Schneggstrasse 3-5 Postfach 1553**
**D-8050 Freising (DE)**

Courier Press, Leamington Spa, England.

## Description

This is a continuation-in-part of copending Patent Application, WO-A-86/03916 published on July 03, 1986.

Background of the Invention

The present invention relates to electro-optical imaging display systems and, more particularly, to infrared systems and systems employing two or more light beams and associated electronics.

Scanning infrared sensors are known in the art. In such sensors, an electro-optical detector converts incident electromagnetic radiation from a viewed field into an electrical signal which is then processed by a signal processor for display in an imager. A telescope unit, which can be directed to point or sight in a desired direction, receives the radiation and directs it onto a scanner having one or more reflective surfaces thereon. Motion of the scanner causes the beam to be swept across the sensitive detecting surface of a detector.

In certain imaging situations, it is desirable to view the subject through a narrow field of view and a wide field of view, the wide field of view providing a background reference useful in signal processing operations including the extraction of signal from noise. A problem arises in that with presently available imaging equipment, two separate sensors including their respective scanners, cryogenic coolers, optics, and imaging electronics must be employed to provide the two fields of view. This introduces unwanted weight, complexity and cost to the imaging and display system.

These problems were solved in the invention described in co-pending patent application, WO-A-84/03777 published September 27, 1984 entitled "Dual Field of View Sensor" by W. W. Kliever. In that invention, a multifaceted polygon wheel scanner shares the inputs from wide and narrow field of view optics and the outputs to detector, one or more displays, and associated electronic and cooling mechanisms. It comprises a scanning infrared sensor or the like employing a scanner, a detector, a beam clipper or equivalent, and a signal processor. A first optical assembly is employed to direct light entering from a first line of sight against the reflective surfaces of a rotating polygon scanner so that the light is sequentially reflected from the facets of the scanner across the detector in a sweeping scan pattern to produce a signal therefrom. A second optical assembly directs light entering from a second line of sight against the reflective surface of the scanner at a point displaced one-half its facet angle for enabling the detector and signal processor and any other mechanisms to be timeshared. Thus, light from the first and second lines of sight are interleaved and swept, one at a time, across the detector.

The polygon wheel scanner utilized in the invention in WO-A-84/03777 accommodates a small telescope exit pupil and, if a large unit pupil were desired, the polygon facetes would have to be appropriately enlarged, thus requiring a larger polygon diameter and wheel. Where space, weight and cost are important considerations, such enlargement has obvious limitations.

In addition, if the scanner must be stopped and started instantaneously, the mass of the scanner must be kept to a minimum. The multifaceted polygon wheel described above has mass sufficiently large to require several seconds for the wheel to stop or start. Thus, its mass militates against its use where instantaneous starting and stopping is required, such as a transition from a scanning mode for a narrow field of view to a wide field employing another mirror.

Summary of the Invention

The present invention overcomes these and other problems with an apparatus in accordance with claim 1 and with a method in accordance with claim 6. More than two fields of view or images of scenes are generated using a single sensor instead of separate sensors. Typically, two fields of view for narrow and wide viewing are generated with two independent telescopes. The invention provides for the combination of the two fields of view by use of a field of view switch which comprises a chopper wheel or electro-optical switch, or the equivalent. Preferably, a rotating chopper wheel with a transparent surface and reflective surface is positioned at an intersection of non-coaxial paths of the incoming radiation from the two fields of view so that the paths of radiation are transmitted in an alternating interleaved manner to a detector. The same field of view switch can be used to perform the detector non-uniformity correction functions, such as automatic responsivity control and D.C. restoration by introducing fields of view from other reflecting surfaces. A single scanner, detector dewar, cryogenic cooler, part of the imager and signal processing are used in common for both fields of view.

Several advantages accrue therefrom. Its cost and weight are low, and the space needed is very much conserved. Associated equipment, such as the scanner, automatic responsivity control and D.C. restoration mechanisms, imager, cryogenic cooler electronics and compressor, detector assembly, focal plane electronics and preamplifiers, are common to both fields of view.

A feature in the construction of the invention is the use of a two-sided scanning mirror in conjunction with folding mirrors for directing paths of radiation from different telescopes to the opposed sides of the mirror, thereby allowing the mirror to provide simultaneously a scanning of each field of view of the respective telescopes. This construction has the advantage of providing yet a further feature wherein a folding mirror is retracted to allow propagation of a beam of radiation from an additional telescope to the common detector, thereby providing a still wider field of view in addition to the foregoing fields of view. The use of the backside mirrored surface of the scanner allows a larger pupil image without necessitating growth of the scan wheel to a prohibitive size, which is especially important for the high performance sensors. Also, the implementation on the backside allows use, for example, of a focal plane array, without a bidirectional readout.

In several applications it is furthermore helpful, not to switch only between two fields of view but having the capability for switching between further fields on view.

Such an additional field of view is, for example, a whole hemisphere. It is therefore an advantage, to provide a multiple field of view sensor having the capability for viewing at least two fields of view without using an additional detector assembly.

Such a high performance assembly have a low weight due to the use of only one detector assembly and the resulting costs are also low cause of the same reasons.

Other aims and objects as well as a more complete understanding of the present invention will appear from the following explanation of exemplary embodiments and the accompanying drawings thereof.

Brief Description of the Drawings

FIG. 1 is a system functional block diagram of a part of the present invention;

FIG. 2a is a diagrammatic view of an optical portion of the system of FIG. 1;

FIG. 2b is a view of a mirrored chopper wheel taken along line 2b-2b of FIG. 2a;

FIG. 3 is a diagram showing the scanner/field of use with typical timing for purposes of illustration;

FIG. 4a depicts ray tracing the system breadboard layout of the present invention;

FIG. 4b is a view of a mirrored chopper wheel taken along line 4b-4b of FIG. 4a;

FIG. 5 illustrates an opto-mechanical three dimensional layout of the present invention; and

FIG. 6 shows a preferred embodiment of the present invention.

Detailed Description of the Invention

The present invention has been designed specifically for use in infrared systems, particularly forward looking infrared (FLIR) systems. However, it is to be understood that the invention is equally applicable to any form of electromagnetic radiation and, therefore, should not be so restricted to infrared electromagnetic radiation.

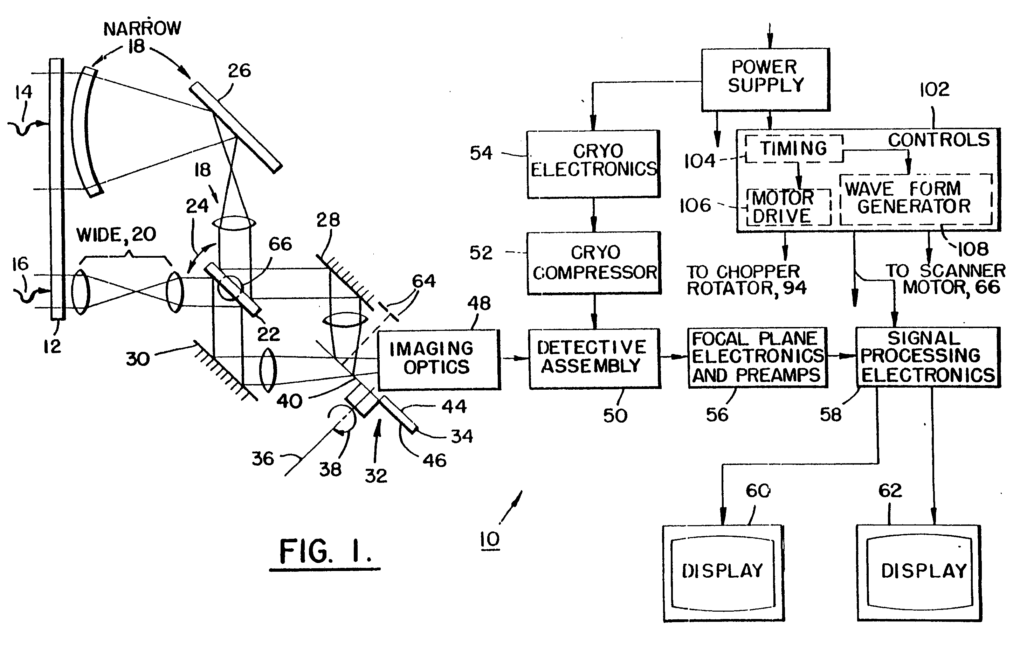

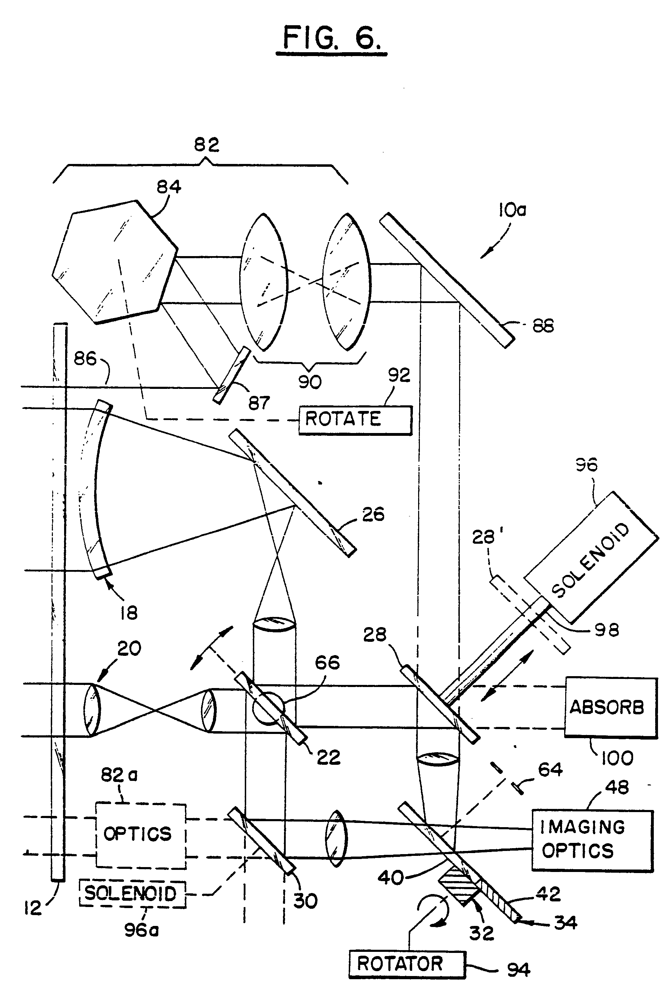

A preferred embodiment of the present invention is shown in fig. 6. To ease the understanding of the present invention functional parts of the invention are described in figures 1 through 5.

Accordingly, as shown in FIG. 1, a system 10 is arranged to view two scenes through an infrared (IR) window 12, which is constructed of conventional materials, it being understood that separate windows may be used for each telescope. As shown, infrared radiation enters through the window from a scene or scenes for narrow field of viewing and wide field of viewing, the infrared radiation being respectively designated by indicia 14 and 16.

Radiations 14 and 16 pass through window 12 into a narrow field of view telescope 18 and a wide field of view telescope 20, the telescopes being represented respectively by an individual and a pair of lenses. It is to be understood, however, that such an illustration of single optical elements is representative of an assemblage of various optical elements, as is well known in the art.

The radiations accessed by telescopes 18 and 20 are directed to a bidirectional double-sided mirror scanner 22 which, as represented by double headed arrow 24, pivots back and forth to scan the scene or scenes. As shown, radiation 16 from wide field of view telescope 20 is transmitted directly onto mirror scanner 22, while radiation 14 passing through narrow field of view telescope 18 is directed onto the mirror scanner 22 through a folding mirror 26. It is, again, to be understood that any suitable optical directing arrangement may be used. Radiation 14 from telescope 18 and radiation 16 from telescope 20 are directed onto opposite sides of mirror scanner 22. A mirrored surface of the scanner 22 directs the radiations 14 and 16 respectively to folding mirrors 28 and 30, which direct the radiations through suitable optics to a switching mechanism or optical switch 32 which switches the field of view.

In its preferred embodiment, switch 32 comprises a chopper wheel 34 which rotates about an axis 36 as generally denoted by arrow 38. Wheel 34 is provided with minimum of two sections, one of which comprises a transparent section 40 and a mirrored surface 42. Surface 42 must be mirrored on its front face 44; however, if desired, it may also be mirrored on its back surface 46. When the wheel is rotating, either one or the other of transparent section 40 or reflective surface 42 is positioned where narrow field-of-view radiation 14 and wide field-of-view radiation 16 intersect. When transparent section 40 is at this intersection, both radiations 14 and 16 pass through the transparent section so that, as viewed in FIG. 1, radiation 16 passes horizontally to the right to imaging optics 48 while radiation 14 passes vertically downward to be absorbed by conventional means, not shown. When rotating wheel 34 presents its mirrored surface 42 at the intersection of the two infrared radiation 14 and 16, radiation 14 then is reflected horizontally to the right of the figure to imaging optics 48 while radiation 16 is either reflected from rear surface 46 downward or otherwise absorbed to prevent it from being directed horizontally to the right. Thus, the radiation from plural fields of view are alternately or serially scanned in an interleaved manner towards the imaging optics 48. While a rotating wheel 34 is illustrated, specifically a rotating wheel having a transparent section and a mirrored surface thereon, it is to be understood that any other electro-optical switch may be used therefor.

The imaging optics 48 are placed adjacent to switch 32 to focus the radiation into a detective assembly 50 having focal plane detectors (not shown) therein. Assembly 50 is suitably cooled by cryogenic cooling devices, generally designated as a cryogenic compressor 52 and cryogenic electronics 54. Detective assembly 50 converts the optical radiation into electrical signals which are then forwarded to an amplifier 56 and signal processing electronics 58 for display in a pair of displays or imager 60 and 62 respectively relating to the viewed wide and narrow fields.

Because switch 32 permits alternate access of the infrared radiation 14 and 16, the two radiations are interleaved and applied to the various electro-optical mechanisms 48, 50, 56, 58 whose functions, therefore, can be time-shared.

In operation, the infrared scene radiation passes through IR window 12 and enters through narrow field of view (NFOV) and wide field of view (WFOV) telescopes 18 and 20. Bidirectional two-sided mirror scanner 22 is used to scan both the narrow field of view and the wide field of view. Scanner 22 scans the scene across the detectors on the focal plane in detective assembly 50. The wide field of view is scanned on one side of mirror scanner 22 and the narrow field of view is scanned on the other side of the mirror scanner 22.

Field of view switch 32, which as described above comprises chopper wheel 34, runs synchronously with scanner 22. While the wide field of view is being scanned by the scanner, the scene radiation is being viewed by the detectors for both the narrow and wide fields of view. Directly before the start of each field of view scan, thermal reference sources 64 flood the focal plane in detective assembly 50 with radiation from one of the thermal sources 64. A detection of radiation from these sources will be described hereinafter. These sources are used in conjunction with well-known circuitry (not shown) for automatic responsivity control (ARC) and D.C. restoration (DCR), which correct column-to-column focal plane array non-uniformities. The infrared radiation is then imaged by the imaging optics 48 onto detective assembly 50, which consists of the focal plane array (FPA) and a dewar.

The detectors convert the infrared scene radiation into an electrical signal which is multiplexed by well-known charge-coupled devices or other circuitry (not shown), amplified by preamplifiers, and video processed in electronics 56 and 58. The signals are then displayed on two separate displays 60 and 62 or a single display resulting in two infrared images of the two scenes.

The configuration shown in FIG. 1 is also useable for radiation in the visible part of the spectrum instead of IR as shown by using the appropriate optics and detectors. Moreover, if the focal plane responds in the visible and IR, a mix of IR and visible images are produced. In addition, by using another field-of-view switch before the scanner on either or both the wide field of view or narrow field of view, as will be described with reference to FIG. 6, a multiple field of view sensor is obtained.

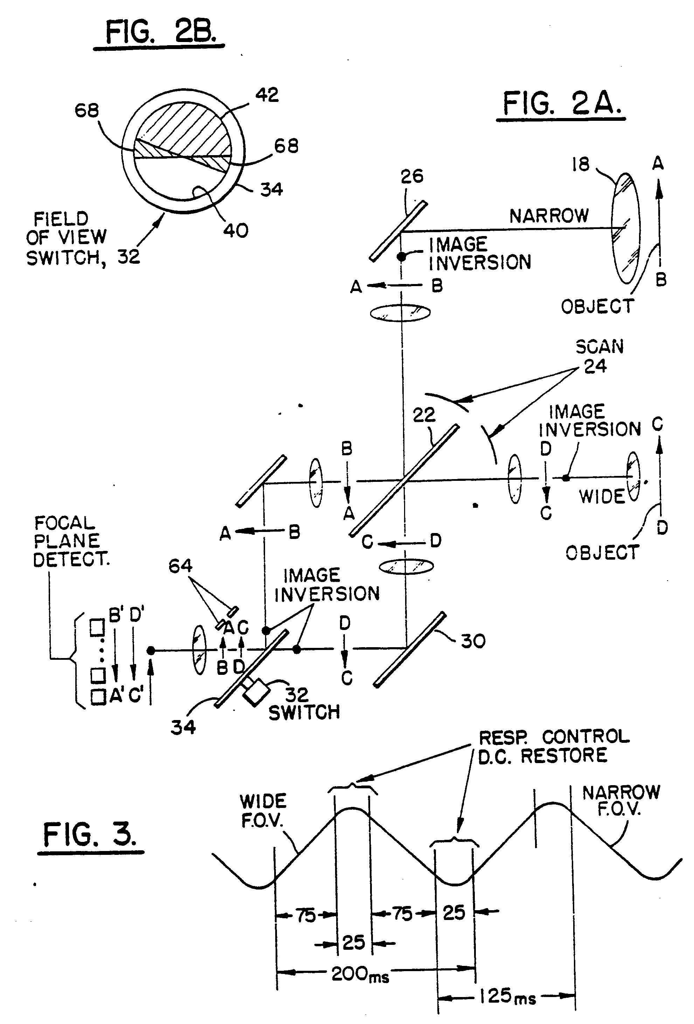

As illustrated in FIGS. 2a and 2b, scanner 22, which is a single scanner, is used for scanning both narrow and wide fields of view. The scanner 22 includes a motor 66 which is driven by a triangularly shaped electrical signal as shown in FIG. 3. As the scanner 22 pivots in both counter-clockwise and clockwise directions, it scans the wide field of view and the narrow field of view, respectively. Moreover, the two objects shown, AB and CD for narrow field of view and wide field of view, respectively, are imaged at A'B' and C'D' on the focal plane array and scanned in the same direction. The contributions of the respective scan lines are integrated over the time of a frame of the raster scan to form a complete image of a scene in a process known as time delay integration (TDI). The optics of the telescopes 18 and 20 provide points of image inversion (FIG 2a), this being a characteristic of reimaging operation of the system 10. The arrows AB and CD show the object images as they propagate through the optics. In a similar manner, there are no left/right inversions from object space to image space on the focal plane array.

The switching between the narrow field of view to wide field of view and vice-versa is accomplished with the use of chopper wheel 34. In addition, the narrow field of view/wide field of view chopper is used for automatic responsivity control, and D.C. restoration. As shown in FIG. 2, part of the wheel is reflective and the other part is transparent. Thus, as it rotates, when the narrow field of view impinges on the reflective part, the detectors view the outside world through the narrow field of view while the wide field of view is obscured by the back of the reflective part of the chopper wheel. When the reflective part of the wheel rotates further, it no longer reflects the narrow field of view. The transparent portion of the wheel moves into position, thus allowing the wide field of view to impinge on the detectors. The detectors then view the outside world through the wide field of view telescope.

Directly after the chopper wheel switches fields, the automatic responsivity control/D.C. restoration processes take place. The line-of-sight of the detectors are reflected off reflecting segments 68 the chopper wheel and onto two reference thermal sources 64. As shown in the scanner/field-of-view switch timing diagram in FIG. 3, both wide and narrow fields of view are continuously updated at a frame rate. The times allotted for each field-field of view switching and automatic responsivity control/D.C. restoration are typically 75 and 25 ms, respectively. Other time intervals can be used. The rising and falling periodic ramp (or sawtooth) waveforms depict the amplitude of current applied to the scanner motor 66 for deflecting the mirrored surfaces of the scanner with oscillatory motion for scanning the narrow and wide fields of view. The cross-section of the beam at the chopper wheel is very small, located at or near a re-imaging section of the beam, to reduce the narrow field of view/wide field of view transition time, and vice-versa.

Both chopper wheel 34 and scanner 22 run synchronously.

Thus, both are locked onto the same clock so that they are in the proper phase, i.e., when the narrow field of view is being scanned by the scanner, the reflective section of the chopper wheel is in the correct position to reflect it onto the detective assembly through the imaging optics.

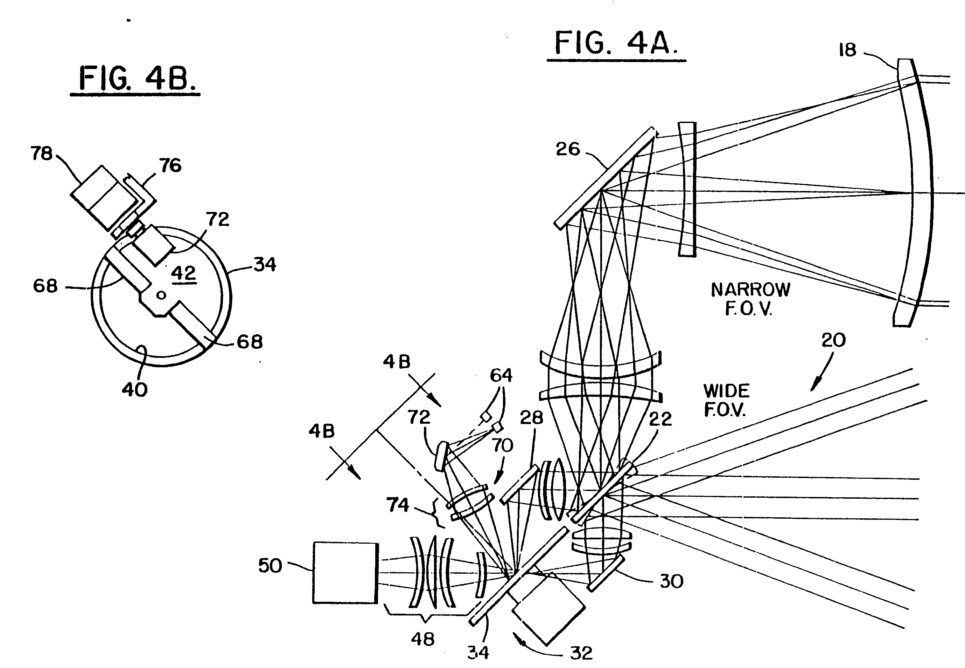

FIG. 4a shows ray tracing for radiation of the telescope 18 for the narrow field of view, and also shows rays swept across a wide field of view of the telescope 20. The optical elements of the telescope 20 have been deleted to simplify the figure. An optical system 70 comprising mirror 72 and lens assembly 74 is provided for directing rays of radiation from either of the thermal reference sources 64 to the chopper wheel 34 of the field-of-view switch 32.

In FIG. 4b, the mirror 72 is shown positioned in front of the chopper wheel 34 by a bracket 76. A motor 78 is supported by the bracket 76 and tilts mirror 72 for selection of one of the sources 64. Individual ones of the sources 64 have different temperatures to better match subject matter of scenes being imaged, thereby to provide a more accurate responsivity control and D.C. restoration. A well-known drive circuit, not shown, operates the motor 78 to position the mirror 72 for selection of the desired source 64.

As shown in FIGS. 2b and 4b, the reflecting segments 68 of chopper wheel 34 are positioned at interfaces of the transparent section 40 and mirrored surface 42. The length of arc subtended by each segment 68 is only a fraction of the length of arc subtended by mirrored surface 42, and corresponds to the length of time shown in FIG. 3 for the responsivity control and D.C. restoration. The segments 68 are angled relative to the plane of mirrored surface 42 for directing rays from lens assembly 74 to imaging optics 48. In accordance with a feature of the invention, the combination of transparent section 40 with mirrored surface 42 and reflecting segments 68 provide the switch 32 with the capacity for switching between three separate fields of view.

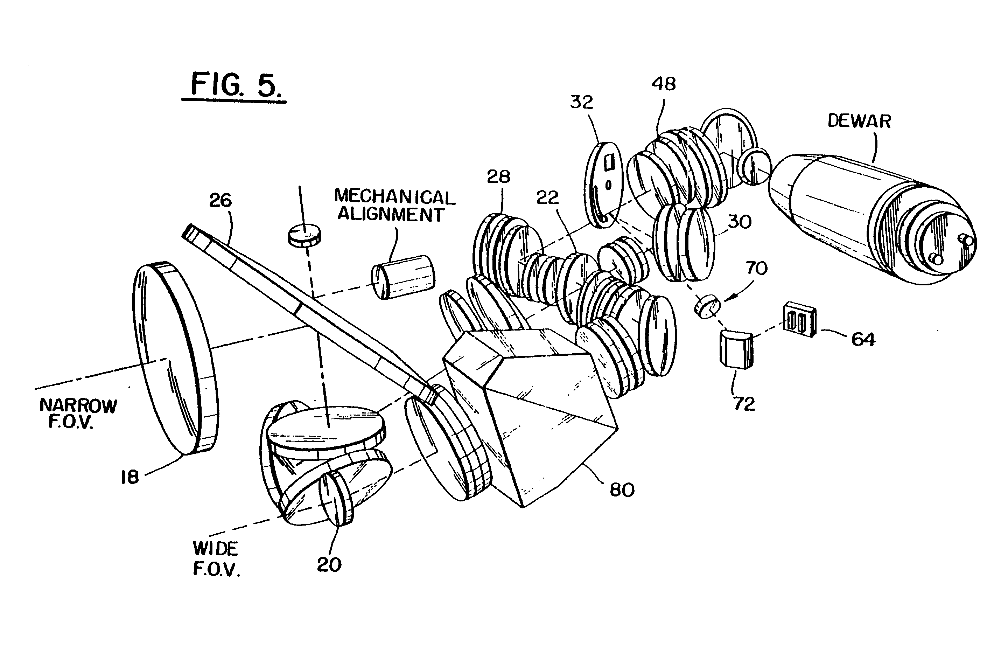

FIG. 5 shows the mechanical arrangement of the components of the system 10, the major components being indicated directly on the drawing. Also included is a Pechan prism 80 which derotates the image to preserve the original orientation of the scene.

In FIG. 6 there is shown still further optical structure, in accordance with the invention, for introducing capability to the system 10 of FIG. 1 for switching between still further fields of view. The system 10a of FIG. 6 comprises scanning optics 82 for viewing a still wider field of view, preferably a hemisphere, via the window 12. The scanning optics 82 includes a rotating prism 84 for scanning incoming rays 86 of scene radiation, as reflected by folding mirror 87, and for directing the rays 86 towards a folding mirror 88 via lens assembly 90 included within the scanning optics 82. Mirror 88 is positioned for directing the rays 86 towards field-of-view switch 32. Also shown are rotators 92 and 94 including motorized electric drives (not shown) for rotating prism 84 and the chopper wheel 34 of switch 32.

The additional field of view of scanning optics 82 is introduced to imaging optics 48 by retraction of folding mirror 28 to a position 28' by a solenoid 96 having a plunger 98 which supports mirror 28 in either its normal position or retracted position. Retraction of mirror 28 allows rays 14 from the telescope 18 to pass directly to an absorber 100 for removal from the system 10a, instead of to imaging optics 48, while the rays 86 from scanning optics 82 propagate along the original path or rays 14 between the normal position of mirror 28 and chopper wheel 34 to the imaging optics 48. Thereby, operation of the solenoid 96 by conventional circuitry (not shown) provides a switching function in addition to that of switch 32 for introducing either the scene viewed by telescope 18 or the scene viewed by scanning optics 82. Yet another switching function may be introduced, if desired, by use of scanning optics 82a and solenoid 96a, shown in phantom, which operate with folding mirror 30 in the same manner as has just been described with reference the operation of scanning optics 82 and solenoid 96 with mirror 28. Such switching operation with folding mirror 30 alternately applies the scene viewed by telescope 20 with the scene viewed by scanning optics 82a to switch 32 and imaging optics 48.

Synchronization of the components of the systems 10 and 10a is shown in FIG. 1 wherein control circuitry 102 comprises a timing unit 104, a motor drive circuit 106 and a waveform generator 108. In response to timing signals of the unit 104, the circuit 106 generates a drive signal to operate the chopper rotator 94 (as well as the rotator 92 of FIG. 6), and the generator 108 generates a triangular waveform for operating the scanner motor 66.

Although the invention has been described with reference to particular embodiments thereof, it should be realized that various changes and modifications may be made therein without departing from the scope of the invention as defined in the claims.

**Claims**

1. A multiple field of view sensor comprising:
a detector assembly (50);
means (18, 20, 82; 82a) for viewing at plural fields of view and for acquiring electromagnetic radiation therefrom;
scanner means (22, 84) optically coupled to said viewing means, said scanner means (22, 84) including folding optics (28, 30) for viewing a first and a second of the fields of view and for directing the radiation to a common intersection; and
a first switch (32) disposed at said intersection and synchronized with said scanner means (22; 84) for alternately directing the radiations to said detector assembly (50), said first switch (32) comprising a rotating wheel (34) having sections (40, 42, 68) thereon for the alternate directing of the radiation to said detector assembly (50), one of said sections (42) being a mirrored surface disposed parallel to a plan of rotation of said wheel characterized in that

said scanning means (22) comprise an oscillating mirror means;

at least a second additional switch (96, 96a) is provided serially coupled along an optical path with said first mentioned switch (32) for substituting additional fields of view in place of one of said first and said second fields of view, and

said folding optics (28, 30) include a folding element (28, 30) and wherein said second switch (96, 96a) includes means (96, 96a) for displacing said folding element (28, 30) from an optical path of one of said first and said second fields of view.

2. A sensor according to claim 1 wherein a second section (68) of said wheel (34) is a reflector extending radially along said wheel and being angled relative to said plan of rotation.

3. A sensor according to one of the preceding claims in which said sections (40, 42, 68) comprise at least one transparent section (40) and at least one reflective surface (42), each of said sections admitting a separate field of view to said detector assembly (50).

4. A sensor according to one of the preceding claims wherein said oscillating mirror means (22) reflects said first field of view from a first side of said mirror means and said second field of view from a second side of said mirror means.

5. A sensor according to one of the preceding claims wherein said mirror means (22) is a two-sided mirror having opposed reflecting surfaces.

6. A method for sensing multiple fields of view comprising the steps of:

scanning at least two fields of view with a scanner (22) for acquiring electromagnetic radiation from the fields of view;

directing the scanned radiation through a switch (32) for serially directing the radiation to a detector assembly (50) while synchronizing said scanning and directing steps characterized by

substituting a third field of view in place of one of the scanned fields of view outputted by said scanning steps; and

transmitting said third field of view to said switch (32) for detection by said detector assembly (50).

7. A method according to claim 6 in which said directing step comprises the steps of utilizing a wheel (34) having at least one transparent surface (40) and one reflective surface (42) thereon, and rotating the wheel to permit the radiation from individual fields of view to be directed to the detector assembly (50) in synchronization with the scanner (22, 84).

8. A method according to claim 7 further comprising a step of tilting a section (68) of a reflective surface (42) of said wheel (34), and introducing a reference beam of radiation via a tilted section of the reflective surface of said wheel (34) for restoring a D.C. level to signals outputted by said detector assembly (50) in response to radiation incident thereon.

## Patentansprüche

1. Vielfach-Blickfeld-Sensor mit:
einem Detektoraufbau (50);
Vorrichtungen (18, 20, 82; 82a) zum Blicken bei einer Mehrzahl von Blickfeldern und zum Aufnehmen von elektromagnetischer Strahlung von ihnen;
Tastvorrichtungen (22, 84), welche mit den Blickvorrichtungen optisch verbunden sind, wobei die Tastvorrichtungen (22, 84) Faltoptiken (28, 30) zum Betrachten eines ersten und eines zweiten Blickfeldes und zum Leiten der Strahlung zu einem gemeinsamen Schnittpunkt beinhalten; und
einem ersten Schalter (32), welcher an dem Schnittpunkt angeordnet ist und mit den Tastvorrichtungen (22, 84) synchronisiert ist, um alternierend die Strahlung zu dem Detektoraufbau (50) zu leiten, wobei der erste Schalter (32) ein rotierendes Rad (34) mit Bereichen (40, 42, 68) darauf aufweist, um alternierend die Strahlung zu dem Detektoraufbau (50) zu leiten, wobei einer der Bereiche (42) eine verspiegelte Oberfläche ist, welche parallel zu einer Rotationsebene des Rades angeordnet ist, dadurch gekennzeichnet, daß
die Tastvorrichtungen (22) eine oszillierende Spiegelvorrichtung aufweisen;
wenigstens ein zweiter zusätzlicher Schalter (96, 96a) bereitgestellt ist, welcher seriell entlang eines optischen Pfades mit dem zuerst erwähnten Schalter (32) verbunden ist, um zusätzliche Blickfelder anstelle von einem der ersten und zweiten Blickfelder zu setzen, und
die Faltoptiken (28, 30) ein Faltelement (28, 30) beinhalten und wobei der zweite Schalter (96, 96a) Vorrichtungen (96, 96a) zum Verschieben des Faltelementes (28, 30) aus einem optischen Pfad von einem der ersten und zweiten Blickfelder aufweist.

2. Sensor nach Anspruch 1, worin ein zweiter Bereich (68) des Rades (34) ein Reflektor ist, welcher sich radial entlang des Rades erstreckt und welcher relativ zu der Rotationsebene gekippt ist.

3. Sensor nach einem der vorangegangenen Ansprüche, in dem die Bereiche (40, 42 und 68) wenigstens einen transparenten Bereich (40) und wenigstens eine reflektierende Oberfläche (42) aufweisen, wobei jeder der Bereiche ein separates Blickfeld zu dem Detektoraufbau (50) zuläßt.

4. Sensor nach einem der vorangegangenen Ansprüche, worin die oszillierende Spiegelvorrichtung (22) das erste Blickfeld von einer ersten Seite der Spiegelvorrichtungen reflektiert und das zweite Blickfeld von einer zweiten Seite der Spiegelvorrichtung.

5. Sensor nach einem der vorangegangenen Ansprüche, worin die Spiegelvorrichtung (22) ein zweiseitiger Spiegel ist, welcher gegenüberliegende reflektierende Oberflächen aufweist.

6. Verfahren zum Aufnehmen von Vielfachblickfeldern, mit den Schritten:
Abtasten von wenigstens zwei Blickfeldern mit einem Taster (22), um elektromagnetische Strahlung von den Blickfeldern aufzunehmen;

Leiten der abgetasteten Strahlung über einen Schalter (32), um die Strahlung seriell zu einem Detektoraufbau (50) zu leiten, während die Abtast- und Leitschritte synchronisiert sind, gekennzeichnet durch

Ersetzen eines dritten Blickfeldes anstelle von einem der abgetasteten Blickfelder, die durch die Abtastschritte ausgegeben wurden; und

Übersenden des dritten Blickfeldes zu dem Schalter (32), um durch den Detektoraufbau (50) detektiert zu werden.

7. Verfahren nach Anspruch 6, in welchem der Leitschritt die Schritte beinhaltet:

Verwenden eines Rades (34) mit wenigstens einer transparenten Oberfläche (40) und einer reflektierenden Oberfläche (42) darauf, und Drehen des Rades, um der Strahlung von den verschiedenen Blickfeldern zu erlauben, zu dem Detektoraufbau (50) in Synchronisation mit dem Taster (22, 84) geleitet zu werden.

8. Verfahren nach Anspruch 7, welches des weiteren den Schritt beinhaltet:

Verkippen eines Bereiches (68) einer reflektierenden Oberfläche (42) des Rades (34), und Vorstellen eines Referenzstrahles von Strahlung über einen verkippten Bereich der reflektierenden Oberfläche des Rades (34), um einen D.C.-Pegel für Signale zurückzuspeichern, welcher durch den Detektoraufbau (50) in Antwort auf einfallende Strahlung ausgegeben wurde.

**Revendications**

1. Capteur à champs de visée multiples comprenant:

un ensemble détecteur (50);

des moyens (18, 20, 82; 82a) destinés à observer plusieurs champs de visée et à saisir un rayonnement électromagnétique qui en provient;

des moyens à scanneur (22, 84) couplés optiquement auxdits moyens d'observation, lesdits moyens à scanneur (22, 84) comprenant une optique de rabattement (28, 30) pour observer un premier et un deuxième des champs de visée et pour diriger le rayonnement sur une intersection commune; et

un premier commutateur (32) disposé à ladite intersection et synchronisé avec ledit moyen à scanneur (22; 84) pour diriger de façon alternée les rayonnements sur ledit ensemble détecteur (50), ledit premier commutateur (32) comprenant une roue tournante (34) portant des sections (40, 42, 68) pour diriger de façon alternée le rayonnement sur ledit ensemble détecteur (50), l'une desdites sections (42) étant une surface de miroir disposée parallèlement à un plan de rotation de ladite roue, caractérisé en ce que ledit moyen de scannage (22) comprend un moyen à miroir oscillant;

au moins un second commutateur supplémentaire (96, 96a) est prévu, couplé en série suivant un trajet optique avec ledit premier commutateur cité (32) pour substituer des champs de visée supplémentaires à la place de l'un desdits premier et deuxième champs de visée, et ladite optique de rabattement (28, 30) comprend un élément de rabattement (28, 30) et dans lequel ledit second commutateur (96, 96a) comprend des moyens (96, 96a) destinés à écarter ledit élément de rabattement (28, 30) d'un trajet optique de l'un desdits premier et second champs de visée.

2. Capteur selon la revendication 1, dans lequel une deuxième section (68) de ladite roue (34) est un réflecteur s'étendant radialement suivant ladite roue et formant un angle avec ledit plan de rotation.

3. Capteur selon l'une des revendications précédentes, dans lequel lesdites sections (40, 42, 68) comprennent au moins une section transparente (40) et au moins une surface réfléchissante (42), chacune desdites sections admettant un champ de visée séparé audit ensemble détecteur (50).

4. Capteur selon l'une des revendications précédentes, dans lequel ledit moyen à miroir oscillant (22) réfléchit ledit premier champ de visée depuis un premier côté dudit moyen à miroir et ledit second champ de visée depuis un second côté du moyen à miroir.

5. Capteur selon l'une des revendications précédentes, dans lequel ledit moyen à miroir (22) est un miroir à deux faces présentant des surfaces réfléchissantes opposées.

6. Procédé pour capter des champs de visée multiples, comprenant les étapes qui consistent:

à scanner au moins deux champs de visée à l'aide d'un scanneur (22) pour saisir un rayonnement électromagnétique provenant des champs de visée;

à diriger le rayonnement scanné à travers un commutateur (32) pour diriger en série le rayonnement sur un ensemble détecteur (50) tout en synchronisant lesdites étapes de scannage et de direction, caractérisé en ce qu'il consiste

à substituer un troisième champ de visée à la place de l'un des champs de visée scannés résultant desdites étapes de scannage; et

à transmettre ledit troisième champ de visée audit commutateur (32) pour une détection par ledit ensemble détecteur (50).

7. Procédé selon la revendication 6, dans lequel ladite étape de direction comprend les étapes qui consistent à utiliser une roue (34) portant au moins une surface transparente (40) et une surface réfléchissante (42), et à faire tourner la roue pour permettre au rayonnement provenant de champs de visée individuels d'être dirigé sur l'ensemble détecteur (50) en synchronisme avec le scanneur (22, 84).

8. Procédé selon la revendication 7, comprenant en outre une étape qui consiste à incliner une section (68) d'une surface réfléchissante (42) de ladite roue (34), et à introduire un faisceau de rayonnement de référence par l'intermédiaire d'une section inclinée de la surface réfléchissante de ladite roue (34) pour rétablir un niveau de courant continu pour des signaux délivrés en sortie par ledit ensemble détecteur (50) en réponse à un rayonnement incident sur ce dernier.

NARROW 18

26

14

18

24

WIDE, 20

66

28

16

22

64

12

30

40

44

34

36

38

32

46

48

IMAGING OPTICS

FIG. I.

10

POWER SUPPLY

102

54 CRYO ELECTRONICS

104 TIMING CONTROLS

106 MOTOR DRIVE WAVE FORM GENERATOR

52 CRYO COMPRESSOR

108

TO CHOPPER ROTATOR, 94

TO SCANNER MOTOR, 66

DETECTIVE ASSEMBLY

FOCAL PLANE ELECTRONICS AND PREAMPS

SIGNAL PROCESSING ELECTRONICS

50

56

58

60

62

DISPLAY

DISPLAY

EP 0 207 153 B1

# FIG. 2B.

FIELD
OF VIEW
SWITCH, 32

# FIG. 2A.

18

A
NARROW
B
OBJECT

IMAGE
INVERSION

A ← B

26

SCAN
24

22

IMAGE
INVERSION C

C
D
WIDE
D

OBJECT

B
A

FOCAL
PLANE
DETECT.

A ← B

64

IMAGE
INVERSION

D

C

30

B' D'

A C

B D

A' C'

34

IMAGE
INVERSION

32
SWITCH

D

C

# FIG. 3.

RESP. CONTROL
D.C. RESTORE

WIDE
F.O.V.

NARROW
F.O.V.

75

75

25

25

200ms

125ms

2

FIG. 4B.

FIG. 4A.

EP 0 207 153 B1

FIG. 5.

# FIG. 6.